# FASCICULE DE BREVET EUROPEEN

(11) **EP 2 072 219 B1**
(45) Date de publication et mention de la délivrance du brevet: **09.03.2016**
(21) Numéro de dépôt: 08171629.2
(22) Date de dépôt: 15.12.2008
(51) Int. Cl.: B29C 47/88, B29D 30/06, B29C 47/92

(54) **Dispositif et procédé de préparation d'un profilé d'un gel thermoplastique élastomère**
Vorrichtung und Verfahren zur Herstellung eine Profils aus einem thermoplastischen Elastomergel
Device and method for preparing a profile of an elastomer thermoplastic gel

(30) Priorité: 21.12.2007 FR 0760255
(43) Date de publication de la demande: 24.06.2009
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: Abad, Vincent, 63400 Chamalières (FR); Chebance, Luc, 63170 Aubière (FR); Lemal, Vincent, 63100 Clermont-Ferrand (FR)
(74) Mandataire: Dequire, Philippe Jean-Marie Denis

(56) Documents cités:
- EP-A- 0 260 949
- FR-A- 2 335 336
- GB-A- 528 335
- US-A- 1 740 029
- DATABASE WPI Week 198633 Thomson Scientific, London, GB; AN 1986-214303 XP002491007 & JP 61 144311 A (TOYODA GOSEI KK) 2 juillet 1986 (1986-07-02)
- DATABASE WPI Week 198451 Thomson Scientific, London, GB; AN 1984-314770 XP002491008 & JP 59 196222 A (MITSUBISHI HEAVY IND CO LTD) 7 novembre 1984 (1984-11-07)

## Description

### Domaine de l'invention

La présente invention concerne un dispositif et un procédé de préparation d'un profilé d'un gel thermoplastique élastomère.

### Arrière plan technologique

Les gels thermoplastiques élastomères sont des matériaux caractérisés par une très faible dureté, un comportement élastique, c'est-à-dire qu'ils retrouvent leur forme initiale après une déformation, même de grande amplitude, et une température de ramollissement au-delà de laquelle ils deviennent plastiques ce qui facilite leur mise en ouvre.

De tels gels peuvent notamment avoir comme matrice des élastomères thermoplastiques styréniques (dits « TPS ») tels les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Pour obtenir une très faible dureté, ces gels comportent aussi des huiles d'extension en proportion élevée.

Ces gels peuvent être préparés en deux étapes. Dans la première étape, les différents constituants du gel sont introduits dans, par exemple, un outil d'extrusion qui plastifie l'élastomère thermoplastique et le mélange avec l'huile d'extension et les autres additifs s'il y a lieu. En sortie d'extrudeuse, le matériau plastique est extrudé par exemple en un jonc qui est coupé pour donner des pellets ou granulés. Pour faciliter le refroidissement du matériau plastique, le document US 2002/049276 indique que le jonc peut être extrudé et découpé dans de l'eau.

Les granulats ou pellets peuvent être stockés. Ils sont ensuite repris et injectés dans un moule pour obtenir leurs formes finales.

Ce procédé de fabrication en deux étapes nécessite cependant l'emploi de produits anti-collants pour éviter que les granulats ou pellets ne se collent entre eux. Ces produits anti-collants ont l'inconvénient d'augmenter de façon sensible la dureté des gels.

Le document WO 97/09391 propose de réaliser des adhésifs comportant un support et un gel épais thermoplastique élastomère en extrudant directement le gel plastique sur un support mobile en translation. Ce mode de mise en oeuvre est utilisable lorsque le rapport de forme de l'extrudat est proche de un. Ce n'est plus le cas lorsque l'on cherche à obtenir un profilé plat, c'est-à-dire dont l'épaisseur est beaucoup plus petite que la largeur, et de dimensions contrôlées. On constate en effet que l'état plastique de faible viscosité du matériau en sortie de filière, et son très fort collant, ne permettent pas de maîtriser de façon suffisante les dimensions du profilé plat lors d'une telle mise en ouvre.

Le document US 1 740 029 propose un procédé et un dispositif pour extruder un tube caoutchouteux pour la fabrication de chambres à air dans lesquels le matériau en sortie de filière est reçu à la surface d'un bain d'eau destiné à le refroidir sans le déformer et sans permettre à sa surface de vulcaniser. Dans ce dispositif l'axe de la filière est horizontal. Le document GB 528 335 présente une méthode de réalisation de profilés caoutchouteux destinés à la fabrication de pneumatiques.

### Description de l'invention

Dans ce qui suit, on entend par « profilé plat », un profilé dont le rapport largeur sur épaisseur est supérieur à 5.

L'invention a pour objet un dispositif de préparation d'un profilé plat d'un gel thermoplastique élastomère comportant :
- un outil d'extrusion avec au moins une alimentation et une sortie ;
- une filière de section adaptée au profil du profilé plat ;
- un bain de refroidissement liquide avec une surface libre pour recueillir et refroidir le profilé plat en sortie de la filière ; et
- un support plan mobile ou bande transporteuse pour recevoir le profilé.

Ce dispositif est caractérisé en ce que la surface libre est disposée à proximité immédiate de la sortie de la filière et en ce que l'angle d'inclinaison de l'axe de la filière relativement à l'horizontale est compris entre 20 et 70 degrés. L'axe de la filière est dirigé vers le bas.

Ces deux caractéristiques du dispositif, une distance minimale entre la sortie de la filière et la surface libre du bain de refroidissement et une inclinaison vers le bas de l'axe de la filière comprise entre 20 et 70 degrés relativement à l'horizontale, sont essentielles pour permettre notamment la première phase de l'extrusion du profilé plat, c'est-à-dire l'amorçage, la mise en route du procédé.

Le matériau à extruder est un gel thermoplastique élastomère qui comprend plus de 200 pce d'agent d'extension. C'est un matériau de très faible viscosité et qui présente un très fort caractère collant.

Si la distance entre la sortie de filière n'est pas minimale, c'est-à-dire inférieure à 50 mm voire 10 mm, la chute du matériau en sortie de la filière due aux forces de gravitation est suffisamment longue pour modifier de façon notable et irréversible la géométrie du profilé. Il n'est plus possible ensuite de retrouver une géométrie précise et reproductible. Le matériau en sortie de filière lors de l'amorçage du procédé a aussi tendance à s'accumuler sous la filière sans se diriger dans la direction du support plan mobile. L'amorçage n'est pas possible.

L'angle d'inclinaison de la filière est aussi très important. Lorsque l'angle α devient trop faible, vers 20 degrés par exemple, l'extrudat pratiquement liquide s'écoule sur le bord inférieur de la filière et l'écoulement ne peut plus être uniforme. Lorsque l'angle est trop élevé, au-delà de 70 degrés, la géométrie de l'écoulement n'est plus constante et l'extrudat, qui a une consistance très faiblement visqueuse, a tendance à tomber de la filière et à vider la zone d'écoulement par gravitation. L'extrudat n'a plus non plus assez d'énergie cinétique pour s'étendre progressivement lors de l'amorçage vers le support mobile. De préférence, cet angle est compris entre 30 et 60 degrés.

La combinaison d'un angle compris dans ces limites et d'une distance minimale entre la surface libre et la sortie de filière est donc indispensable pour que l'extrudat en sortie de filière soit recueilli à la surface libre du liquide et se déplace progressivement vers le support mobile.

Pour faciliter cet amorçage du procédé, il est aussi favorable que le bain de refroidissement liquide comporte des moyens de brassage du liquide qui induisent un courant de surface orienté dans le sens du déplacement du profilé à la surface de liquide du bain de refroidissement. Cela a l'avantage de faciliter le déplacement du profilé plat jusqu'au support plan mobile lors du démarrage de l'extrusion du gel thermoplastique.

Ces moyens de brassage permettent aussi d'homogénéiser la température dans le bain de refroidissement.

La surface libre du bain de refroidissement liquide a l'avantage de recevoir le matériau plastique de faible viscosité en sortie de filière et de refroidir très efficacement sa paroi inférieure jusqu'à ce qu'il puisse conserver sa forme. Le support plan mobile reçoit à l'extrémité de la surface libre du bain de refroidissement le profilé. La vitesse de déplacement du support plan peut être légèrement supérieure, égale ou inférieure à la vitesse d'extrusion du matériau plastique pour régler finement l'épaisseur du profilé. Le fait de refroidir le matériau plastique de faible viscosité sur la surface libre d'un bain de refroidissement liquide a l'avantage de permettre ces réglages en raison de l'absence totale de frottements entre la surface libre et le profilé. Le caractère très collant du profilé ne perturbe en rien ces réglages fins. La longueur de la surface libre est telle que le profilé plat a une température suffisamment basse pour que la forme du profilé soit bien fixée.

De préférence, le bain de refroidissement liquide est réfrigéré, par exemple par le passage d'un fluide refroidi dans un serpentin disposé dans le bain de refroidissement liquide à proximité de la surface libre du bain de refroidissement.

Un liquide de refroidissement peut être l'eau. Mais beaucoup d'autres liquides peuvent être utilisés dès lors que leur densité est supérieure à celle des gels thermoplastiques élastomères à mettre en oeuvre et qu'ils n'altèrent pas le matériau par dissolution, gonflement ou dépôt de matières.

L'invention a aussi pour objet un procédé de réalisation d'un profilé plat d'un gel élastomère comportant au moins, à titre d'élastomère majoritaire, un élastomère thermoplastique styrénique (dit « TPS ») et plus de 200 pce d'une huile d'extension au moyen d'un outil d'extrusion avec au moins une alimentation et une sortie comprenant les étapes suivantes :
- introduire les constituants du profilé dans la ou les alimentations de l'outil d'extrusion ;
- plastifier et mélanger les constituants pour obtenir un matériau plastique homogène ;
- distribuer le matériau plastique à la sortie de l'outil d'extrusion avec une filière de section adaptée au profil du profilé plat ;
- refroidir le matériau plastique pour obtenir le profilé ; et
- recevoir le profilé sur un support plan mobile.

Ce procédé est caractérisé en ce que l'étape de refroidissement comporte les étapes suivantes :
- extruder le matériau plastifié dans l'air avec un angle d'inclinaison de l'axe de la filière relativement à l'horizontale compris entre 20 et 70°; et
- recevoir et convoyer le matériau plastifié sur la surface libre d'un bain de refroidissement liquide.

De préférence, l'outil d'extrusion comportant au moins une alimentation pour des composants solides et une alimentation pour des composants liquides, les composants introduits dans les alimentations sont les composants élémentaires du profilé. Le dispositif selon l'invention est particulièrement adapté pour réaliser en une seule opération la formulation et la réalisation d'un profilé plat. Cela permet de ne pas utiliser d'anti-collants et ainsi de conserver au profilé plat toutes ses propriétés de collant et de faible dureté.

De préférence, on reçoit le profilé plat, sur un intercalaire anti-collant, siliconé ou sulfurisé, par exemple, disposé sur le support plan mobile.

Il est avantageux de protéger aussi la surface extérieure du profilé plat au moyen d'un intercalaire anti-collant, siliconé ou sulfurisé, par exemple.

La quantité d'huile d'extension du gel élastomère peut être avantageusement supérieure à 500 pce. Une gamme préférentielle est comprise entre 500 et 1000 pce.

Une huile d'extension préférentielle est le polyisobutylène, notamment pour une application comme couche auto-obturante d'un bandage pneumatique.

### Description brève des dessins

Tous les détails de réalisation sont donnés dans la description qui suit, complétée par les figures 1 à 5, dans lesquelles :
- la figure 1 présente en vue de côté un dispositif de préparation d'un profilé plat selon l'invention ;
- la figure 2 présente le dispositif de la figure en vue de dessus ;
- la figure 3 présente en vue de côté une filière du dispositif;
- la figure 4a, 4b et 4c présentent en vue de dessus et en coupes partielles une filière du dispositif ;
- la figure 5 présente une vue en coupe du bain de refroidissement.

### Description détaillée d'un mode de réalisation

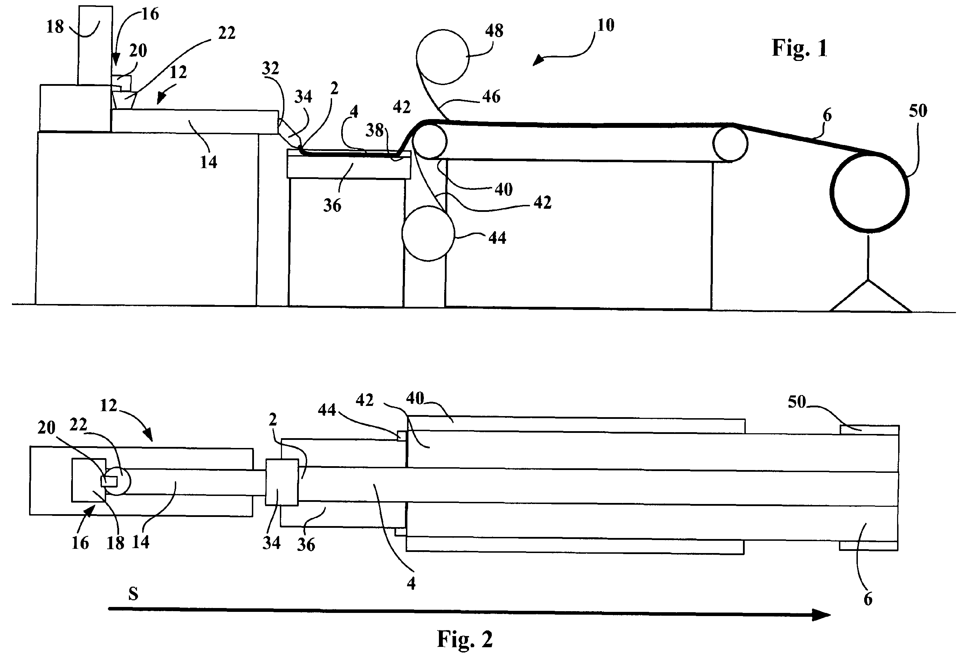

Les figures 1 et 2 présentent en vue de côté et de dessus, et de façon schématique, un dispositif 10 de préparation d'un profilé plat d'un gel thermoplastique élastomère.

Ce dispositif comprend un outil d'extrusion, avantageusement une extrudeuse bi vis 12, un bain de refroidissement 36 et des moyens de convoyage 40 et de stockage 50.

L'extrudeuse 12 comprend deux vis placées dans un fourreau 14 qui tournent dans le même sens. Au moins deux alimentations, la première 16 pour les constituants solides et une autre non représentée pour les constituants liquides, permettent d'introduire les constituants du gel thermoplastique dans le fourreau 14. L'alimentation 16 est utilisée pour introduire le constituant thermoplastique sous forme de granulés ou de poudres. Elle comprend un réservoir 18, un fourreau 20 pour deux vis d'alimentation et un cône d'introduction 22. Les constituants liquides du gel sont introduits usuellement en aval de la première alimentation.

A la sortie 32 du fourreau 14 de l'extrudeuse 12 se trouve une filière 34 de dimensions adaptées aux dimensions du profilé plat attendu.

On trouve ensuite un bain de refroidissement 36 rempli d'eau réfrigérée.

La distance libre entre la sortie de la filière 34 et la surface 38 du bain de refroidissement 36 doit être la plus faible possible pour permettre une application régulière de l'extrudat pratiquement liquide sur la surface du bain. Une distance inférieure à 15 mm est utile, on peut descendre jusqu'à de l'ordre de 5 mm. Il est souhaitable de n'avoir aucun contact entre l'eau et le bas de la filière pour ne pas perturber son équilibre thermique.

Les moyens de convoyage comprennent une bande transporteuse 40 sans fin et deux rouleaux 44, 48, d'intercalaires. L'intercalaire 42 est destiné à protéger la face inférieure du profilé plat et l'intercalaire 46 sa face supérieure (il est à noter que cet intercalaire 46 et le rouleau 48 ne sont pas représentés à la figure 2 pour des raisons de clarté).

Les moyens de stockage comprennent un rouleau de stockage 50 du profilé plat 6 revêtu des deux côtés par un intercalaire.

La flèche S indique le sens de déplacement de la matière.

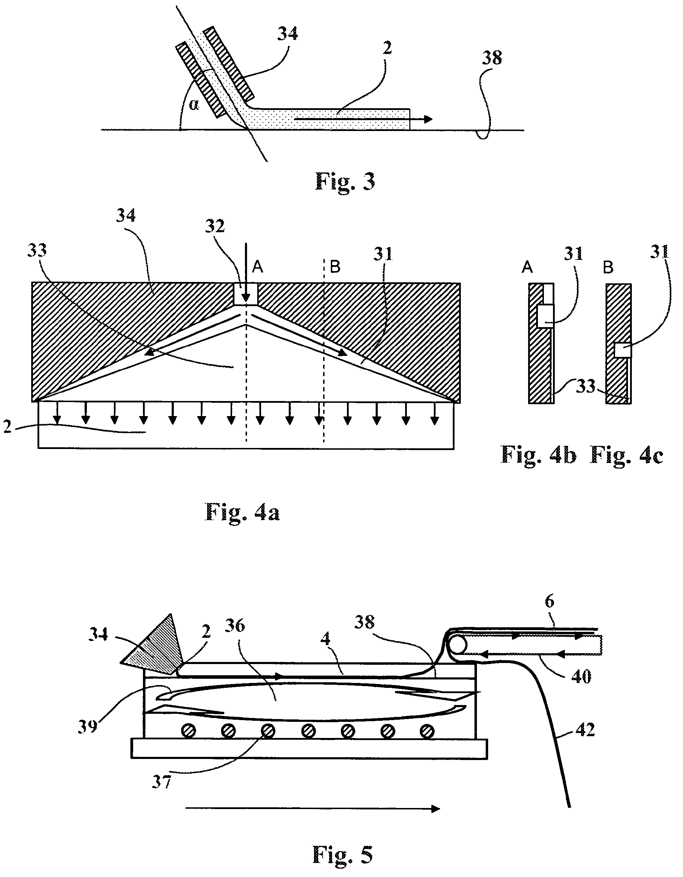

La figure 3 présente schématiquement une vue en coupe de la sortie de la filière 34. L'extrudat 2, matériau plastique de faible viscosité dans la filière 34, est extrudée de celle-ci et est recueilli par la surface 38 du bain de refroidissement. La flèche indique le sens de déplacement de la matière. L'axe de la filière fait un angle α avec l'horizontal.

La figure 4 montre une vue de dessus d'une demi-filière. La figure 4a présente la sortie 32 de l'extrudeuse 12 ainsi que la zone d'écoulement 33 du gel élastomère thermoplastique à travers la filière. Une gorge 31 adjacente à la sortie 32 (voir figures 4b et 4c) permet de distribuer le gel visqueux sur l'ensemble de la zone d'écoulement 33.

La figure 5 illustre en coupe le bain de refroidissement 36. Le bain est rempli de préférence d'eau et comprend un serpentin 37 où circule un fluide de refroidissement pour conserver la température de l'eau en dessous de 30 degrés Celsius par exemple. Des moyens de brassage (non représentés) sont aussi prévus pour assurer un mouvement d'homogénéisation de la température dans le bain qui induisent un courant de surface orienté dans le sens de déplacement du profilé plat 4 à la surface 38 du bain de refroidissement. Ce mouvement est illustré par la flèche 39.

Le fonctionnement du dispositif 10 est le suivant.

Les constituants élémentaires du gel thermoplastique élastomère sont introduits dans les deux alimentations 18 sous forme de poudres ou de granulés pour l'élastomère et sous forme liquide (plus ou moins visqueux) pour l'huile d'extension.

Le fourreau 14 est chauffé pour permettre aux actions mécaniques et thermiques combinées de plastifier l'élastomère et d'obtenir un matériau plastique visqueux homogène. La température à l'intérieur du fourreau peut aller de 200 à 320 degrés Celsius. A la sortie 32 de l'extrudeuse 12, l'extrudat est sous forme pratiquement liquide et est à peine plus visqueux que de l'eau. Il est alors extrudé dans la filière 34 qui le répartit de façon à obtenir un profilé plat de dimensions appropriées. La température en sortie de la filière peut encore être de l'ordre de 180 à 220 degrés. Des réglages fins de température des diverses parties de la filière permettent de régler finement l'homogénéité géométrique de l'écoulement en sortie de la filière.

L'extrudat 2 en sortie de la filière est recueilli par la surface 38 du bain de refroidissement et chemine progressivement le long de ce bain en se refroidissant. On règle le refroidissement de l'eau du bain de refroidissement pour que la température de cette eau ne dépasse pas 30 degrés. On homogénéise aussi la température de ce bain comme il a été décrit.

A l'extrémité du bain de refroidissement, la température du profilé plat 4 est proche de 30 degrés et ce profilé a maintenant des propriétés élastiques. Il reste particulièrement collant. Il est alors repris par la bande de transport 40 sur laquelle est déroulé l'intercalaire inférieur 42 dont la surface extérieure, en contact avec le gel, est anti-collante, papier siliconé ou sulfurisé par exemple. La vitesse de déplacement de la bande de transport peut être, comme bien connu de l'homme du métier, légèrement supérieure, égale ou même légèrement inférieure à la vitesse de sortie de l'écoulement de la filière pour régler finement l'épaisseur du profilé plat.

Au cours de son transfert sur la bande de transport, on peut appliquer un intercalaire sur la paroi supérieure du profilé plat pour le protéger lors de son stockage. On enroule enfin pour le stocker le profilé protégé 6 autour du rouleau 50.

Des essais ont été réalisés en utilisant comme élastomère un SEBS de la société Kraton Polymers, le G1654 et comme huile d'extension du polyisobutylène Dynapak 190 ou PIB. Le taux de PIB était de 85%, celui de l'élastomère de 15%. Ce PIB utilisé à ce taux entraîne un caractère particulièrement collant du gel obtenu. Le procédé et le dispositif selon l'invention ont permis de mélanger et de réaliser un profilé plat de dimensions diverses, jusqu'à 400 mm de largeur et de 1 à 4 mm d'épaisseur. La régularité du profilé plat obtenu a été excellente. Le dispositif selon l'invention permet de régler et ajuster finement l'épaisseur du profilé plat pendant la première partie de son refroidissement sans être perturbé par la caractère très collant du gel obtenu.

Après son stockage, les profilés obtenus peuvent être coupés à dimension et être utilisés comme semi-fini pour la fabrication de bandages pneumatiques. On peut notamment, de façon usuelle, appliquer en premier un profilé de gel thermoplastique sur un tambour de confection et ensuite appliquer l'ensemble des autres constituants du pneumatique et vulcaniser le bandage obtenu. La couche de gel élastomère est ainsi disposée à la surface intérieure de la cavité de l'enveloppe. Cette couche a des propriétés remarquable d'auto-oburation des crevaisons subies par le pneumatique en roulage.

On peut aussi appliquer cette couche entre deux couches de mélange caoutchouteux. La couche de gel thermoplastique auto-obturante est alors disposée à l'intérieur de la structure du pneumatique obtenu.

On peut enfin appliquer le profilé directement sur la surface intérieure du bandage pneumatique après sa vulcanisation en profitant de son remarquable caractère collant.

L'invention n'est pas limitée aux exemples décrits et représentés et diverses modifications peuvent y être apportées sans sortir de son cadre défini par les revendications annexées.

## Revendications

1. Dispositif (10) de préparation d'un profilé plat (4) d'un gel thermoplastique élastomère comportant :
- un outil d'extrusion (12) avec au moins une alimentation (16) et une sortie (32);
- une filière (34) de section adaptée au profil du profilé plat ;
- un bain de refroidissement liquide (36) avec une surface libre (38) pour recueillir et refroidir le profilé plat (4) en sortie de la filière (34); et
- un support plan mobile ou bande transporteuse (40) pour recevoir le profilé ;
**caractérisé en ce que** la surface libre est disposée à proximité immédiate de la sortie (32) de la filière (34), et **en ce que** l'angle d'inclinaison de l'axe de la filière relativement à l'horizontale est compris entre 20 et 70 degrés.

2. Dispositif (10) selon la revendication 1, dans lequel la distance libre entre l'extrémité de la filière (34) et la surface libre (38) du bain de refroidissement liquide (36) est inférieure à 50 mm.

3. Dispositif (10) selon la revendication 2, dans lequel la distance libre entre l'extrémité de la filière et la surface libre (38) du bain de refroidissement liquide (36) est inférieure à 10 mm.

4. Dispositif (10) selon l'une des revendications 1 à 3, dans lequel l'angle d'inclinaison de l'axe de la filière (34) relativement à l'horizontale est compris entre 30 et 60 degrés.

5. Dispositif (10) selon l'une des revendications 1 à 4, dans lequel le bain de refroidissement (38) comporte des moyens de brassage du liquide pour induire un courant de surface orienté dans le sens du déplacement du profilé plat (4) à la surface (38) du liquide du bain de refroidissement (36).

6. Dispositif (10) selon l'une des revendications 1 à 5, dans lequel le liquide du bain de refroidissement (36) est réfrigéré.

7. Dispositif (10) selon la revendication 6, dans lequel le liquide du bain de refroidissement (36) est réfrigéré par passage d'un fluide refroidi dans un serpentin (37) disposé dans le liquide du bain de refroidissement à proximité de la surface de liquide (38) dudit bain de refroidissement (36).

8. Dispositif (10) selon l'une des revendications 1 à 7, dans lequel le liquide du bain de refroidissement (36) est constitué d'eau.

9. Procédé de réalisation d'un profilé plat (4) d'un gel élastomère comportant au moins, à titre d'élastomère majoritaire, un élastomère thermoplastique styrénique (dit « TPS ») et plus de 200 pce d'une huile extension au moyen d'un outil d'extrusion (12) avec au moins une alimentation (16) et une sortie (32) comprenant les étapes suivantes :
- introduire les constituants du profilé dans la ou les alimentations (16) de l'outil d'extrusion (12) ;
- plastifier et mélanger les constituants pour obtenir un matériau plastique homogène ;
- distribuer le matériau plastique à la sortie de l'outil d'extrusion avec une filière (34) de section adaptée au profil du profilé plat ;
- refroidir le matériau plastique pour obtenir le profilé ; et
- recevoir le profilé sur un support plan mobile ou bande transporteuse (40) ;
**caractérisé en ce que** l'étape de refroidissement comporte les étapes suivantes :
- extruder le matériau plastique dans l'air avec un angle d'inclinaison de l'axe de la filière relativement à l'horizontale compris entre 20 et 70°; et
- recevoir et convoyer le matériau plastique sur la surface de liquide (38) d'un bain de refroidissement (36).

10. Procédé selon la revendication 9, dans lequel, l'outil d'extrusion (12) comportant au moins une alimentation (16) pour des composants solides et une alimentation pour des composants liquides, les composants introduits dans lesdites alimentations sont les composants élémentaires du profilé.

11. Procédé selon l'une des revendications 9 et 10, dans lequel, on reçoit le profilé plat (4) sur un intercalaire anti-collant (42) disposé sur le support plan mobile (40).

12. Procédé selon la revendication 11, dans lequel on applique sur la surface extérieure du profilé plat (4) un intercalaire anti-collant (46).

13. Procédé selon l'une quelconque des revendications 11 et 12, dans lequel l'intercalaire anti-collant (42,46) est un papier siliconé ou sulfurisé.

14. Procédé selon l'une des revendications 9 à 13, dans lequel la quantité d'huile d'extension est supérieure à 500 pce.

15. Procédé selon la revendication 14, dans lequel la quantité d'huile d'extension est comprise entre 500 et 1000 pce.

16. Procédé selon l'une des revendications 9 à 15, dans lequel l'huile d'extension est composée au moins en partie de polyisobutylène.

17. Procédé selon l'une quelconque des revendications 9 à 16, comportant en plus une étape d'incorporation du profilé plat (4) dans la structure ou sur la surface d'un bandage pneumatique.

## Patentansprüche

1. Vorrichtung (10) zur Herstellung eines Flachprofils (4) aus einem thermoplastischen Elastomergel, umfassend:
- ein Extrusionswerkzeug (12) mit mindestens einer Zuleitung (16) und einem Ausgang (32);
- eine Ziehdüse (34) mit einem an das Profil des Flachprofils angepassten Querschnitt;
- ein flüssiges Kühlungsbad (36) mit einer freien Oberfläche (38), um das Flachprofil (4) am Ausgang der Ziehdüse (34) zu sammeln und abzukühlen; und
- eine mobile ebene Unterlage oder ein Förderband (40), um das Profil aufzunehmen;
**dadurch gekennzeichnet, dass** die freie Fläche in unmittelbarer Nähe des Ausgangs (32) der Ziehdüse (34) angeordnet ist, und dass der Neigungswinkel der Achse der Ziehdüse in Bezug zur Horizontalen zwischen 20 und 70 Grad beträgt.

2. Vorrichtung (10) nach Anspruch 1, bei der der freie Abstand zwischen dem Ende der Ziehdüse (34) und der freien Oberfläche (38) des flüssigen Kühlungsbades (36) kleiner als 50 mm ist.

3. Vorrichtung (10) nach Anspruch 2, bei der der freie Abstand zwischen dem Ende der Ziehdüse und der freien Fläche (38) des flüssigen Kühlungsbades (36) kleiner als 10 mm ist.

4. Vorrichtung (10) nach einem der Ansprüche 1 bis 3, bei der der Neigungswinkel der Achse der Ziehdüse (34) in Bezug zur Horizontalen zwischen 30 und 60 Grad beträgt.

5. Vorrichtung (10) nach einem der Ansprüche 1 bis 4, bei der das Kühlungsbad (38) Mittel zum Durchmischen der Flüssigkeit umfasst, um einen Oberflächenstrom zu bewirken, der in die Richtung der Bewegung des Flachprofils (4) an der Oberfläche (38) der Flüssigkeit des Kühlungsbades (36) gerichtet ist.

6. Vorrichtung (10) nach einem der Ansprüche 1 bis 5, bei der die Flüssigkeit des Kühlungsbades (36) gekühlt wird.

7. Vorrichtung (10) nach Anspruch 6, bei der die Flüssigkeit des Kühlungsbades (36) durch Strömen eines gekühlten Fluids durch eine Spiralleitung (37), die in der Flüssigkeit des Kühlungsbades in der Nähe der Oberfläche der Flüssigkeit (38) des Kühlungsbades (36) angeordnet ist, gekühlt wird.

8. Vorrichtung (10) nach einem der Ansprüche 1 bis 7, bei der die Flüssigkeit des Kühlungsbades (36) aus Wasser besteht.

9. Verfahren zur Herstellung eines Flachprofils (4) aus einem thermoplastischen Elastomergel, umfassend mindestens als mehrheitliches Elastomer ein thermoplastisches Styrolelastomer ("TPS" genannt) und mehr als 200 Gewichtsteile (pce) eines Verlängerungsöls, mit Hilfe eines Extrusionswerkzeugs (12) mit mindestens einer Zuleitung (16) und einem Ausgang (32), umfassend die folgenden Schritte:
- Einführen der Bestandteile des Profils in die Zuleitung(en) (16) des Extrusionswerkzeugs (12);
- Plastifizieren und Mischen der Bestandteile, um einen homogenen Kunststoff zu erhalten;
- Verteilen des Kunststoffes am Ausgang des Extrusionswerkzeug mit einer Ziehdüse (34) mit einem an das Profil des Flachprofils angepassten Querschnitt;
- Kühlen des Kunststoffes, um das Profil zu erhalten; und
- Aufnehmen des Profils auf einer mobilen ebenen Unterlage oder einem Förderband (40);
**dadurch gekennzeichnet, dass** der Kühlungsschritt die folgenden Schritte umfasst:
- Extrudieren des Kunststoffes in der Luft mit einem Neigungswinkel der Achse der Ziehdüse in Bezug zur Horizontalen zwischen 20 und 70°; und
- Aufnehmen und Befördern des Kunststoffes auf der Oberfläche der Flüssigkeit (38) eines Kühlungsbades (36).

10. Verfahren nach Anspruch 9, bei dem das Extrusionswerkzeug (12) mindestens eine Zuleitung (16) für feste Bestandteile und eine Zuleitung für flüssige Bestandteile umfasst und die in die Zuleitungen eingeführten Bestandteile die elementaren Bestandteile des Profils sind.

11. Verfahren nach einem der Ansprüche 9 und 10, bei dem das Flachprofil (4) auf einer Trennschicht (42), die auf der mobilen ebenen Unterlage (40) vorgesehen ist, aufgenommen wird.

12. Verfahren nach Anspruch 11, bei dem auf die Außenfläche des Flachprofils (4) eine Trennschicht (46) aufgebracht wird.

13. Verfahren nach einem der Ansprüche 11 und 12, bei dem die Trennschicht (42, 46) ein Silikonpapier oder Pergamentpapier ist.

14. Verfahren nach einem der Ansprüche 9 bis 13, bei dem die Menge an Verlängerungsöl größer als 500 Gewichtseinheiten (pce) ist.

15. Verfahren nach Anspruch 14, bei dem die Menge an Verlängerungsöl zwischen 500 und 1000 Gewichtseinheiten (pce) liegt.

16. Verfahren nach einem der Ansprüche 9 bis 15, bei dem das Verlängerungsöl zumindest teilweise aus Polyisobutylen zusammengesetzt ist.

17. Verfahren nach einem der Ansprüche 9 bis 16, ferner umfassend einen Schritt der Eingliederung des Flachprofils (4) in die Struktur oder Oberfläche eines Luftreifens.

## Claims

1. Device (10) for preparation of a flat profiled element (4) from an elastomeric thermoplastic gel comprising:
- an extruder (12)with at least one feed (16) and one discharge (32);
- an extruder die (34) of section suitable for the profile of the flat profiled element;
- a liquid cooling bath (36) with a free surface (38) for receiving and cooling the flat profiled element (4) being discharged from the extruder die (34); and
- a flat moving support or endless conveyor belt (40) for receiving the profiled element; **characterized in that** the free surface is arranged in the immediate vicinity of the outlet (32) of the extruder die (34), and **in that** the angle of inclination of the axis of the extruder die to the horizontal is between 20 and 70 degrees.

2. Device (10) according to Claim 1, **characterized in that** the free distance between the end of the extruder die (34) and the free surface (38) of the liquid cooling bath (36) is less than 50 mm.

3. Device (10) according to Claim 2, **characterized in that** the free distance between the end of the extruder die and the free surface (38) of the liquid cooling bath (36) is less than 10 mm.

4. Device (10) according to one of Claims 1 to 3, **characterized in that** the angle of inclination of the axis of the extruder die (34) to the horizontal is between 30 and 60 degrees.

5. Device (10) according to one of Claims 1 to 4, **characterized in that** the cooling bath (38) has means for stirring the liquid to create a surface current oriented in the direction of movement of the flat profiled element (4) on the surface (38) of the liquid of the cooling bath (36).

6. Device (10) according to one of Claims 1 to 5, **characterized in that** the liquid of the cooling bath (36) is cooled.

7. Device (10) according to Claim 6, **characterized in that** the liquid of the cooling bath is cooled by passing a cooled fluid through a coil (37) arranged in the liquid of the cooling bath near the surface (38) of the liquid of said cooling bath (36).

8. Device (10) according to one of Claims 1 to 7, **characterized in that** the liquid of the cooling bath (36) is constituted of water.

9. Method of production of a flat profiled element (4) of an elastomeric gel comprising at least, as principal elastomer, a thermoplastic styrene elastomer (called "TPS") and more than 200 pce of an extender oil by means of an extruder (12) with at least one feed (16) and one discharge (32) comprising the following stages:
- introduction of the constituents of the profiled element in the feed (16) or feeds of the extruder (12);
- plastication and mixing of the constituents to obtain a homogeneous plastic material;
- distribution of the plastic material at the outlet of the extruder with an extruder die (34) of section suitable for the profile of the flat profiled element;
- cooling the plastic material to obtain the profiled element; and
- receiving the profiled element on a flat moving support or endless conveyor belt (40); **characterized in that** the cooling stage comprises the following stages:
with an angle of inclination of the axis of the extruder die to the horizontal being between 20 and 70 degrees
- receiving and conveying the plastic material on the surface of the liquid of a cooling bath.

10. Method according to Claim 9, **characterized in that** the extruder has at least one feed (16) for solid components and one feed for liquid components, the components introduced in said feeds being the elementary components of the profiled element.

11. Method according to one of Claims 9 and 10, **characterized in that** the flat profiled element (4) is received on a non-stick backing (42) arranged on the flat moving support (40).

12. Method according to Claim 11, **characterized in that** a non-stick backing (46) is applied on the external surface of the flat profiled element (4).

13. Method according to any one of Claims 11 and 12, **characterized in that** the non-stick backing (42, 46) is siliconized or sulphurized paper.

14. Method according to one of Claims 9 to 13, **characterized in that** the amount of extender oil is greater than 500 pce

15. Method according to Claim 14, **characterized in that** the amount of extender oil is between 500 and 1000 pce

16. Method according to one of Claims 9 to 15, **characterized in that** the extender oil is composed at least partly of polyisobutylene.

17. Method according to any one of Claims 9 to 16, additionally comprising a stage of incorporating the flat profiled element (4) in the structure or on the surface of a pneumatic tyre.
